# EUROPÄISCHE PATENTANMELDUNG

(11) **EP 2 949 815 A1**
(43) Veröffentlichungstag der Anmeldung: **02.12.2015**
(21) Anmeldenummer: 15001584.0
(22) Anmeldetag: 26.05.2015
(51) Int. Cl.: E01C 3/04, C09K 17/40

(54) **BODENSTABILISIERUNGSMITTEL UND VERFAHREN ZUR BODENSTABILISIERUNG**

(30) Priorität: 30.05.2014 DE 102014008037
(71) Anmelder: Kroeger, Joachim, 49504 Lotte (DE)
(72) Erfinder: Kroeger, Joachim, 49504 Lotte (DE)
(74) Vertreter: Busse & Busse

(57) **Zusammenfassung**

Bodenstabilisierungsmittel zur Stabilisierung und Vergütung natürlich anstehender Böden, enthalten 90-97 Gew.-% Mineralstoffgemisch, 1-6 Gew.-% Talgamin und 1-4 Gew.-% Di (hydriertes) Dimethylammoniumchlorid bezogen auf das Gesamtgewicht. Das erfindungsgemäße Bodenstabilisierungsmittel wird verwendet für die Erstellung von Tragschichten im Straßen- und Wegebau sowie für Tragschichten von Industrie-, Lager- und Parkflächen.

## Beschreibung

Die vorliegende Erfindung betrifft ein Bodenstabilisierungsmittel aus einem Mineralstoffgemisch zur gezielten Verbesserung der Bodenparameter lokal verfügbarer Böden. Durch die Zugabe und Vermischung des Mineralstoffgemisches mit natürlich anstehenden Böden werden diese in ihren Eigenschaften in Bezug auf Tragfähigkeit, Wasseraufnahmeverhalten und Erosionsstabilität bleibend verbessert. Das Mineralstoffgemisch setzt sich aus mehreren Komponenten zusammen.

Ist die Tragfähigkeit des anstehenden Bodens für eine Flachgründung nicht ausreichend, müssen entsprechende technische Maßnahmen zur Bodenverbesserung beziehungsweise Baugrundverbesserung ausgeführt werden. Mit Bodenverbesserung ist eine Optimierung der Einbaubedingungen und der Verdichtbarkeit gemeint. Mit einer Bodenstabilisierung soll die Tragfähigkeit von Böden erhöht werden.

Bei der Bodenstabilisierung wird die Stabilität nicht tragfähiger Böden durch die Zugabe von Bindemitteln verbessert. Die Auswahl des geeigneten Bindemittels richtet sich dabei meist nach der Korngrößenverteilung und dem Wassergehalt des Bodens. Die Bodenstabilisierung oder -verfestigung mit Kalk, Zement oder anderen Bindemitteln ist eine im Tiefbau seit Jahren bewährte Technik.

Bei der Bodenstabilisierung mit Zement findet eine Hydratation der Hauptkomponenten des Zementes - Trikalziumsilikat (C3S), Dikalziumsilikat (C2S), Trikalziumaluminat (C3A) und Tetrakalziumaluminoferrit (C4A) - mit dem Porenwasser statt. Die hydratierten Kalziumsilikate, Kalziumaluminate bilden im Porenraum in einer primären Reaktion eine Matrix aus Zementstein, verbunden mit einer raschen Erhöhung der Festigkeit, weil die Bodenpartikel fixiert und an der Bewegung behindert werden. Eine sekundäre Reaktion bewirkt eine Stabilisierung der Bodenpartikel, aus der eine bleibende Strukturänderung resultiert. Nachteilig bei dieser Methode der Bodenstabilisierung ist der hohe Zementbedarf bei feinkörnigen, hochplastischen Böden.

Bei der Bodenstabilisierung mit Kalk werden je nach gewünschtem Effekt Branntkalk - CaO, Kalkhydrat - Ca(OH)2 oder hydraulischer Kalk verwendet. Branntkalk wird überwiegend dann verwendet, wenn der Boden gleichzeitig entwässert werden soll. Als Soforteffekt verringert sich der Wassergehalt des Bodens durch die Verdunstung von Porenwasser infolge Reaktionswärme und es entsteht Kalziumhydroxid (CaO + H2O = Ca(OH2) + Wärme). Als Effekte bilden die Bodenpartikel Aggregate, die sich im Laufe der Zeit verfestigen und so die mechanischen Eigenschaften des Bodens verbessern. Die hydraulischen Reaktionen sind vergleichbar mit denen des Zementes, laufen aber um Größenordnungen langsamer ab.

Die Struktur des Bodens und dessen Mineralogie bestimmen wesentlich die chemischen und physikalischen Effekte einer Bodenverfestigung. Mit zunehmendem Feinteilgehalt verliert ein Boden durch Wassereinwirkung seine Festigkeit und damit an Tragfähigkeit. Dieses ist auf den hohen Anteil an Tonmineralien von feinkörnigen Böden zurückzuführen. Das Wasserbindevermögen der Tonmineralien ist maßgeblich verantwortlich für das Quell- und Schrumpfverhalten und für die plastischen Eigenschaften des Bodens. Feinkörnige Böden scheiden daher in vielen Ausschreibungen als Tragschichtenmaterial aus und werden abgetragen und ausgetauscht.

Die Aufgabe der vorliegenden Erfindung ist es, die bodenphysikalischen Eigenschaften und die Bodenkenngrößen von anstehenden gemischtkörnigen und feinkörnigen Böden so zu verbessern, dass diese als hochwertiger Baustoff für Flächengründungen verwendet werden können. Auf diese Weise können kostenintensive und ökologisch belastende Erdbewegungen auf externe Flächen oder Erddeponien minimiert werden. Hierzu sind der verfügbare Boden mit seinen Eigenschaften und die erdstatischen Anforderungen an das Bauwerk zu betrachten.

Zur Lösung dieser Aufgabe wird ein Bodenstabilisierungsmittel nach Anspruch 1 vorgeschlagen. Wesentliche Ausgestaltungen des Bodenstabilisierungsmittels ergeben sich aus den Ansprüchen 2 bis 7. Ein vorteilhaftes Verfahren zur Bodenstabilisierung ist in Anspruch 8 angegeben.

Zum Wirksamwerden der Inhaltsstoffe der vorliegenden Erfindung ist das Vorhandensein von Tonmineralien in Form von Ton, Lehm, Mergel, Laterit oder anderen feinkörnigen Böden erforderlich.

Tone sind Materialien, die überwiegend aus feinkörnigen Mineralien zusammengesetzt sind. Diese Tonminerale besitzen eine große spezifische Oberfläche, mit der eine hohe Kationenaustauschkapazität verbunden ist, welche zur geophysikalischen Reaktion der Inhaltsstoffe der vorliegenden Erfindung erforderlich ist. Ähnlich wie bei einem natürlichen organischen Polymer werden die Wirkstoffe oder Substanzen des Bodenstabilisierungsmittels an der Oberfläche der Tonminerale über Kationenbrücken, Wasserstoffbindungen, van der Waalskräfte und Anionenadsorptionsmechanismen gebunden und ermöglichen auf diese Weise die Bildung stabiler Aggregate.

Das erfindungsgemäße Bodenstabilisierungsmittel setzt sich aus den nachfolgend genannten Inhaltstoffen zusammen:

| **Inhaltsstoffe** | **CAS-Nummer** | **Konzentration** |
|---|---|---|
| (a) Mineralgemisch aus Kaolinit, Illit und Quarz | | ∼ 90 - 97 Gew.-% |
| (b) Talgamin (hydriertes Talgalkyl) | 61788-45-2 | ∼ 1 - 6 Gew.-% |
| (c) Di (hydrierter Talg) dimethylammoniumchlorid | 61789-80-8 | ∼ 1 -4 Gew.-% |

Der Bestandteil (a) des Bodenstabilisierungsmittels besteht aus einem Mineralstoffgemisch aus Kaolinit, Illit und Quarz. Es handelt sich um ein Gemisch spezieller Tone zur Verbesserung lokaler Böden. Hinsichtlich erhöhter Anforderungen an Feinkornanteil, Mineralbestand und Bodenmechanik. Vorzugsweise besteht das Mineralstoffgemisch aus 75-85 % Kaolinit, 20-24 % Illit und 1-2 % Quarz, jeweils in Gewichtsprozenten anzugeben.

Bei einer bevorzugten Variante des Bodenstabilisierungsmittels liegt der Anteil des Mineralstoffgemisches bezogen auf das Gesamtgewicht in dem Bereich von 94-97 Gew.-%, besonders bevorzugt bei 96 Gew.-%.

Der Bestandteil (b) des Bodenstabilisierungsmittels besteht aus Talgamin oder auch hydrierten Talgalkyl. Bei einer bevorzugten Variante der Erfindung liegt der Anteil des Bestandteils (b) bezogen auf das Gesamtgewicht des Bodenstabilisierungsmittels in dem Bereich von 1-6 Gew.-%, besonders bevorzugt bei 3 Gew.-%.

Unter Talgamin wird im Sinne der vorliegenden Erfindung ein Gemisch von Aminen verstanden, vorwiegend bestehend aus primären Akylaminen mit der generellen Formel R-NH2, wobei R eine Kohlenstoffkette mit 16-18 Kohlenstoffatomen C16-C18 darstellt. Der Schmelzpunkt liegt zwischen 45°C und 55°C.

Bei dem Bestandteil (c) des Bodenstabilisierungsmittels handelt es sich um eine quaternäre Ammoniumverbindung, bestehend aus einem Gemisch von Substanzen unterschiedlicher Alkylkettenlängen. In einer bevorzugten Variante der Erfindung sollen die Kettenlängen C12 max. 1 %, C14 1-5 %, C16 25-35 % und C18 ca. 64 % betragen.

Bei einer bevorzugten Variante der Erfindung liegt der Anteil des Bestandteils (c) bezogen auf das Gesamtgewicht des Bodenstabilisierungsmittels in dem Bereich von 2-3 Gew.-%. Der Schmelzpunkt des Materials liegt zwischen 55-60 °C.

Zur Herstellung des erfindungsgemäßen Bodenstabilisierungsmittels werden die Inhaltsstoffe in einem definierten Temperaturbereich erhitzt, wobei das Mineralstoffgemisch (a) von dem aufgeschmolzenen Talgamin (b) und dehydrierten Talgdimethylammoniumchlorid (c) überzogen bzw. umhüllt wird und anschließend in einer Mischvorrichtung beim Erkaltungsprozess homogenisiert wird.

Das Mineralstoffgemisch dient als Trägermaterial für die Stoffe (b) und (c). Wahlweise kann auch ein Bindemittel als Trägermaterial zur Anwendung kommen, wenn der lokal verfügbare Boden über ausreichend Tonmineralanteile verfügt.

Die Zustandsform des erfindungsgemäßen Bodenstabilisierungsmittels ist pulverförmig mit einer Partikelgröße, die vorzugsweise zwischen 0,08 und 0,15 mm liegt, besonders bevorzugt < 10,0 mm.

Des Weiteren wird beansprucht, dass das erfindungsgemäße Bodenstabilisierungsmittel dem Boden in einer Anwendungsdosierung von 24-30 kg/m³ zugegeben wird, indem das Mittel mit einer geeigneten Streuvorrichtung aufgebracht und anschließend mit dem zu behandelnden Boden homogen vermischt wird. Vor der Komprimierung des lokalen Bodens wird diesem gemäß zuvor gemessener optimaler Bodenfeuchte die entsprechende Menge Wasser zur Verdichtung zugeführt.

Das hier beschriebene und beanspruchte Bodenstabilisierungsmittel wird zur Stabilisierung und Vergütung natürlich anstehender Böden verwendet für die Erstellung von Tragschichten im Straßen- und Wegebau sowie für Tragschichten von Industrie-, Lager- und Parkflächen. Das hier beschriebene Bodenstabilisierungsmittel kann auch für horizontale Dichtelemente verwendet werden, insbesondere im Bereich der Basis- und Oberflächenabdichtung oder zur Abdichtung von Gewässern.

Bei einer bevorzugten Anwendungsform werden zusätzlich 5 % des Inhaltsstoffes (c) in heißen Wasser bei einer Temperatur von mindestens 50°C zu einer Dispersion verarbeitet und anschließend dem Prozesswasser beigeben, um eine Verstärkung der grenzflächen- und oberflächenaktiven Wirkung zu erreichen. Die Gesamtmenge an Dispersion, die dem Prozesswasser zugeführt wird, beträgt 0,8-1,5 Liter pro m³. Vorzugsweise beträgt der Anteil 0,9 Liter / m³, besonders bevorzugt 1,0 Liter / m³.

Das erfindungsgemäße Bodenstabilisierungsmittel enthält grenzflächenaktive Verbindungen dipolaren Charakters, die durch ihre elektrische Ladung die Eigenschaften der Tonminerale im Boden ändern, sich an der Oberfläche der Tonminerale binden und auf diese Weise die Bildung stabiler Aggregate ermöglichen.

## Patentansprüche

1. Bodenstabilisierungsmittel aus einem Mineralstoffgemisch, **gekennzeichnet durch** folgende Zusammensetzung: 90-97 Gew.-% Mineralstoffgemisch, 1-6 Gew.-% Talgamin und 1-4 Gew.-% Di (hydriertes Talg) dimethylammoniumchlorid, wobei sich alle Prozentangaben auf das Gesamtgewicht der pulverförmigen Zusammensetzung des Mittels beziehen.

2. Bodenstabilisierungsmittel nach Anspruch 1, **dadurch gekennzeichnet, dass** der Inhaltsstoff Mineralstoffgemisch bezogen auf sein Gesamtgewicht anteilsmäßig 75-85 Gew.-% Kaolinit, 20-24 Gew.-% Illit und 1-2 Gew.-% Quarz enthält.

3. Bodenstabilisierungsmittel nach Anspruch 1 oder 2, **dadurch gekennzeichnet, dass** dieses grenzflächenaktive Bindungen an der Bodenmatrix bildet.

4. Bodenstabilisierungsmittel nach einem der Ansprüche 1 bis 3, **dadurch gekennzeichnet, dass** dem Boden die zur Reaktion und zur Aggregatbildung erforderlichen Feinkornfraktionen (Tonminerale) in Form eines Mineralstoffgemisches beigegeben ist oder in diesem enthalten ist, wobei die Effekte des Ionenaustausches durch den Mineralbestand des Bodens und durch die Kationen-Austausch-Kapazität (KAK) bestimmt sind.

5. Bodenstabilisierungsmittel nach einem der Ansprüche 1 bis 4, **dadurch gekennzeichnet, dass** dieses zusätzlich eine flüssige Dispersion umfasst, wobei in der Dispersion 5 Gew.-% Di (hydriertes Talg) dimethylammoniumchlorid enthalten ist, welches aufgrund seiner Inhaltsstoffe eine grenzflächenaktive Wirkung im Porenbereich von Böden entfaltet und die Oberflächenspannung des Wassers herabsetzt.

6. Bodenstabilisierungsmittel nach einem der Ansprüche 1 bis 5, **dadurch gekennzeichnet, dass** die beiden Inhaltsstoffe Talgamin und Di (hydriertes Talg) dimethylammoniumchlorid in einem thermischen Verfahren aufgeschmolzen sind und das Mineralstoffgemisch damit überzogen ist.

7. Bodenstabilisierungsmittel nach Anspruch 6, **dadurch gekennzeichnet dass** das Mineralstoffgemisch nach dem Coatingprozess beim Abkühlen in einer Mischvorrichtung homogen vermischt ist, damit es nicht zu Verklumpungsprozessen kommt.

8. Verfahren zur Bodenstabilisierung unter Verwendung eines Bodenstabilisierungsmittels nach einem der Ansprüche 1-7, **dadurch gekennzeichnet, dass** a) das Bodenstabilisierungsmittel auf natürlich anstehende Böden mit einer Streuvorrichtung in einer Anwendungsdosierung von 24-30 kg/m³ aufgebracht wird, b) dass das Bodenstabilisierungsmittel mit dem lokal anstehenden Boden durch eine geeignete Mischvorrichtung homogen vermischt wird, c) dass dem Boden eine Menge Wasser entsprechend dem optimalen Wassergehalt (Proctor Optimum) des zu behandelnden Bodens zugegeben wird, d) dass dem Prozesswasser zusätzlich eine grenzflächenaktive Dispersion zugegeben wird in einer Anwendungsdosierung von 0,8-1,0 Liter/m³ zu behandelnde Erde und e) dass der mit dem Bodenstabilisierungsmittel behandelte Boden mit einer geeigneten Verdichtungseinheit komprimiert wird.
